# EUROPEAN PATENT APPLICATION

(11) **EP 1 693 583 A1**
(43) Date of publication of application: **23.08.2006**
(21) Application number: 06250771.0
(22) Date of filing: 14.02.2006
(51) Int. Cl.: F16C 29/08, F16C 29/02, F16J 15/40

(54) **Dust-proof linear bearing structure**

(30) Priority: 17.02.2005 JP 2005040839
(71) Applicant: FANUC LTD, Minamitsuru-gun, Yamanashi 401-0597 (JP)
(72) Inventor: Kawai, Tomohiko, Minamitsuru-gun Yamanashi, 401-0304 (JP); Ebihara, kenzo, Fanuc Dai3virakaramatsu, Minamitsuru-gun Yamanashi, 401-0511 (JP); Ooki, Takeshi, Fanuc Dai3virakaramatsu, Minamitsuru-gun Yamanashi, 401-0511 (JP)
(74) Representative: Billington, Lawrence Emlyn

(57) **Abstract**

A fluid bearing which levitates a slider (20) can be configured by providing bearing fluid spraying outlets (22,23) in appropriate positions on the effective bearing surface of the slider facing each guide surface (11,12) of a linear bearing. To prevent foreign matter from entering the clearances between bearing surfaces, foreign matter purging fluid outlets (24,25) are provided at the lower front and lower back ends of the slider to spray a fluid onto the exposed parts of each guide surface.

## Description

### BACKGROUND OF THE INVENTION

### 1. Field of the Invention

The present invention relates to a dust-proof structure applicable to a linear bearing used in, for example, a machine tool or precision measuring machine.

### 2. Description of the Related Art

Machine tools, precision measuring machines, and many other machines have a linear axis, which often includes a fluid bearing that uses a gaseous fluid. The fluid (air or another gas) is generally supplied from a slider in the linear fluid bearing structure, so guide surfaces exterior to the moving slider are exposed to the ambient atmosphere. Foreign matter such as dust or cutting chips is therefore likely to adhere to the guide surfaces, and can degrade straightness and other aspects of operational precision.

This problem is conventionally addressed by covering the bearing surface with a cover or the like (for example, a bellows cover with one end attached to the slider and the other end attached to an end of the guide). Even inside a cover, however, foreign matter such as dust may adhere to a non-contact bearing such as an air bearing. If the slider moves in this state, with foreign matter adhering to the bearing, the foreign matter gets onto the bearing surfaces and may destabilize or disable the operation of the machine.

A structure that uses an air flow such as an air curtain to keep foreign matter out of bearing clearances is disclosed in Japanese Patent Application Laid-open No. 2004-286109. In this structure, a bearing clearance, which is supplied with a flow of air for bearing through a first porous body, is adjoined by a wider clearance, which is supplied with a separate flow of air through a second porous body. This second air flow is directed toward the rim of a rotating spindle and functions as an air curtain that prevents foreign matter from entering the bearing clearance.

Thus, as described above, there is a known method of preventing foreign matter from entering the bearing clearances around a rotating spindle by use of the air flow of an air curtain. However, the conditions around a rotating spindle differ from the conditions around a linear axis with which the present invention concerns, and Japanese Patent Application Laid-open No. 2004-286109 does not contemplate application of its proposed method to a linear axis. In a rotating spindle, the extent of the bearing surface of the stationary member that faces the bearing surface (the outer circumferential surface) of the movable member (the rotating spindle) is constant even when the spindle turns. In the case of a linear axis, as the movable member (slider) moves, the bearing surface (guide surface) of the stationary member that was exposed at one moment may face the bearing surface (the inner surface) of the movable member (the slider) across a narrow clearance at the next moment, but such a situation never occurs in the case of a rotating spindle.

### SUMMARY OF THE INVENTION

This invention adopts a linear bearing structure in which foreign matter purging fluid is forcibly sprayed from the slider (movable body) onto the guide bearing surface in the sliding direction, thereby keeping the guide surface clean before it faces the bearing surface of the slider. The invention is applied to a dust-proof structure for a linear bearing equipped with a guide having at least one guide surface aligned in the direction of linear motion and a slider having a surface facing the guide surface.

A feature of the present invention is that the slider has fluid spraying means for spraying foreign matter purging fluid onto the part of the guide surface exposed outside the slider and the foreign matter purging fluid spraying means has at least one foreign matter purging fluid spraying aperture means for each guide surface.

The linear bearing is typically a fluid bearing formed between the guide surface and the surface of the slider which faces the guide surface.

The direction of spraying of the foreign matter purging fluid can be changed by the foreign matter purging fluid spraying aperture means and the type of foreign matter purging fluid can also be selectively changed.

One or more suction apertures can be disposed on the slider for each guide surface.

This invention is well adapted to conditions specific to linear bearings having a bearing surface (guide surface) that changes between exposed and non-exposed states as a movable body (slider) moves, and can provide a dust-proof structure for a linear bearing that can prevent degradation of operational precision, such as lack of straightness or unstable operation, resulting from the entry or adherence of foreign matter such as dust, and can avoid situations that might lead to a malfunction or other failure.

### BRIEF DESCRIPTION OF THE DRAWINGS

These and other objects and features of the present invention will be apparent from the description of the following embodiments with reference to the accompanying drawings, in which:
FIG. 1 is a diagram showing the general configuration of a linear bearing to which an embodiment of the dust-proof structure according to the present invention is applied.
FIG. 2 is a vertical cross section of the linear bearing of FIG. 1 taken in the longitudinal direction of a guide surface and shows an embodiment of the dust-proof structure according to the present invention, in which foreign matter purging fluid is sprayed onto the guide surface from the slider.
FIG. 3 is a diagram showing a first modification of the dust-proof structure in FIG. 2, in which multiple foreign matter purging fluid spraying outlets are disposed in the slider of FIG. 1.
FIG. 4 is a diagram showing a second modification of the dust-proof structure of FIG. 2, in which the direction of spraying of the foreign matter purging fluid is variable.
FIG. 5 is a diagram showing a third modification of the dust-proof structure of FIG. 2, in which multiple types of foreign purging fluid are supplied.
FIG. 6 is a diagram showing a fourth modification of the dust-proof structure of FIG. 2, in which the slider has a suction aperture.

### DETAILED DESCRIPTION OF THE PREFERRED EMBODIMENTS

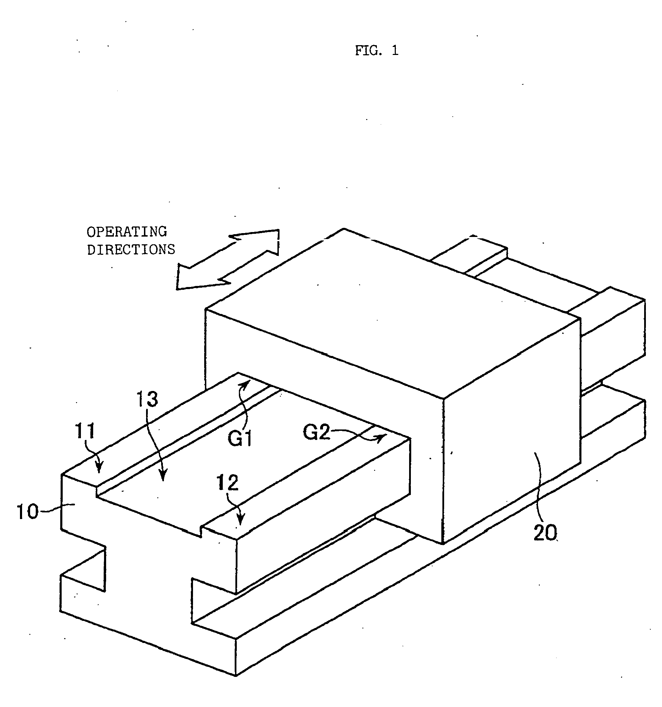

FIG. 1 is a diagram showing the general configuration of a linear bearing to which an embodiment of the dust-proof structure acccording to the present invention is applied.

The linear bearing comprises a guide 10 and a slider 20. The slider 20 can move with respect to the guide 10 in the directions indicated by the arrows without contacting guide 10 through a fluid bearing system. The guide 10 has two guide surfaces 11 and 12 and a concave part 13 is formed between these guide surfaces 11 and 12. For effective use of the fluid, the fluid is supplied to the bearing from slider 20.

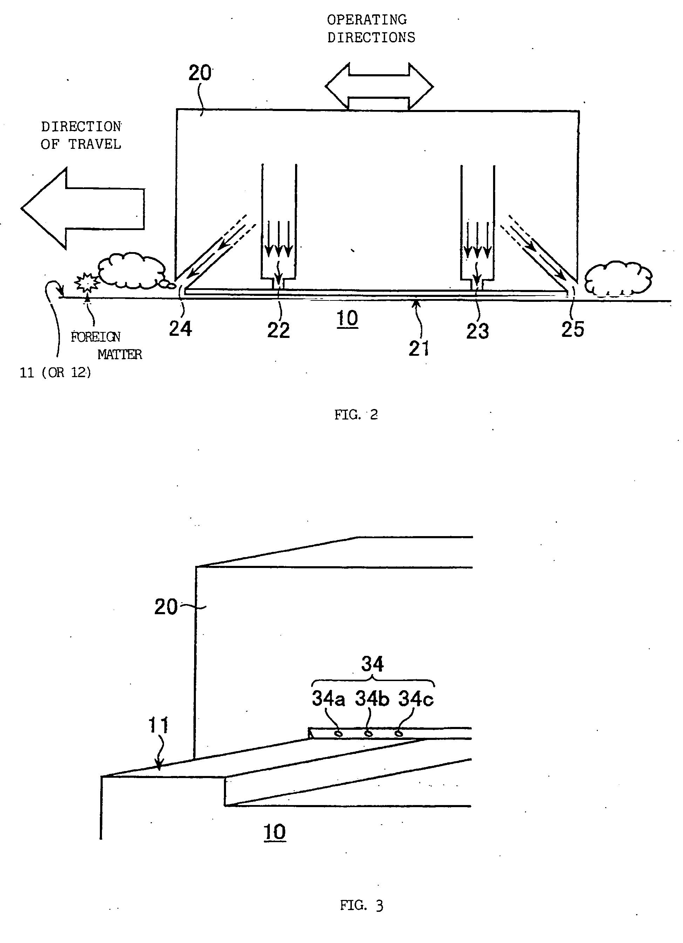

An appropriate number (for example, two for each guide surface) of bearing fluid outlets 22 and 23 (in FIG. 2) are provided in the slider 20 at the guide inner surface thereof which faces the guide surfaces 11 and 12, and bearing fluid is sprayed onto guide surfaces 11 and 12 from the outlets 22 and 23. A lift or buoyant force then acts on slider 20 based on known principles and gaps G1 and G2 are generated between the slider 20 and the guide inner surfaces of the guide 10, thereby enabling non-contact movement. Air is generally used as the bearing fluid, but another gas or a liquid may be used instead. The number of guide surfaces 11 and 12 is not limited to two; there may be just one, or three or more.

In a linear bearing of this type, as described above, foreign matter such as dust or chips adhering to guide surfaces 11 and 12 may degrade bearing performance or cause a malfunction. Therefore, this invention achieves a dust-proof structure for effectively purging foreign matter adhering or approaching to the guide surfaces 11 and 12 of the linear bearing. Embodiments of the dust-proof structure according to the present invention will be described below with reference to FIGS. 2 to 6.

FIG. 2 is a vertical cross section of the linear bearing shown in FIG. 1 taken in the longitudinal direction (the operating direction of the linear axis) of guide surfaces 11 and 12 and a structure for spraying a foreign matter purging fluid (a gas or liquid, the flow of which purges or removes foreign matter) from slider 20 onto guide surfaces 11 and 12. This sectional structure is common to every vertical cross section in the longitudinal direction of guide surfaces 11 and 12. As shown in this figure, an effective bearing surface 21 is provided as part of the surface of slider 20 facing the guide surface 11 (or 12) and a fluid bearing structure is formed between the effective bearing surface 21 and guide surfaces 11 and 12, which are the effective bearing surfaces of the guide.

Bearing fluid (air or another fluid) is sprayed onto guide surface 11 (or 12) from bearing fluid outlets 22 and 23 disposed in appropriate positions (two positions here) on effective bearing surface 21, thereby keeping the slider 20 suspended. Bearing fluid outlets 22 and 23 are connected to a high-pressure bearing fluid source through appropriate paths (not shown) . The pressure and flow rate of the bearing fluid are set so that a necessary floating force acts on slider 20.

In this embodiment, foreign matter purging fluid outlets 24 and 25 are provided in addition to bearing fluid outlets 22 and 23. These foreign matter purging fluid outlets 24 and 25 are formed at the bottom of slider 20 near both ends in the sliding direction. The effective bearing surface 21 is positioned between foreign matter purging fluid outlets 24 and 25. As shown in the figure, foreign matter purging fluid from the foreign matter purging fluid outlets 24 and 25 is sprayed toward the lower front and lower back with respect to the direction of travel of slider 20 so that a jet of fluid strikes parts of guide surfaces 11 and 12 that are exposed outside slider 20.

The foreign matter purging fluid outlets 24 and 25 are connected to a high-pressure foreign matter purging fluid source through appropriate flow paths (not shown). The pressure and/or flow rate of foreign matter purging fluid is preferably adjustable by an appropriate known adjustment mechanism. Air is generally used as a foreign matter purging fluid, but other gases (for example, carbon dioxide) or liquids can also be used. In particular, a liquid (water or another liquid) containing a surfactant may be used to enhance the cleaning effect on guide surfaces 11 and 12.

Thus, even if foreign matter comes flying and adheres to an exposed part (not covered by slider 20) of guide surface 11 or 12, it is possible to purge that foreign material by blowing it from a short distance with foreign matter purging fluid discharged from any one of the foreign matter purging fluid outlets 24 and 25 when the slider 20 approaches the part where the foreign matter adhered in association with the subsequent axial movement. Therefore, foreign matter adhering to the guide surfaces 11 and 12 is prevented from entering clearances G1 and G2 (see FIG. 1) between the bearing surfaces. As a result, performance degradation, unstable operation, malfunctions, and other linear bearing problems are avoided.

The embodiment described above does not restrict the technical scope of the invention, as other embodiments are possible.

For example, in the above embodiment, each guide surface is provided with one foreign matter purging fluid outlet at the front and one at the back, respectively, but this is only an example. As shown in FIG. 3, for example, a plurality of (here, three) foreign matter purging outlets 34a to 34c may be provided in a line along the width direction of guide surface 11 (or 12) on slider 20. If multiple foreign matter purging fluid outlets 34 (34a, 34b, 34c) are used, a uniform foreign matter purging effect can be easily obtained in the width direction of guide surface 11 (or 12).

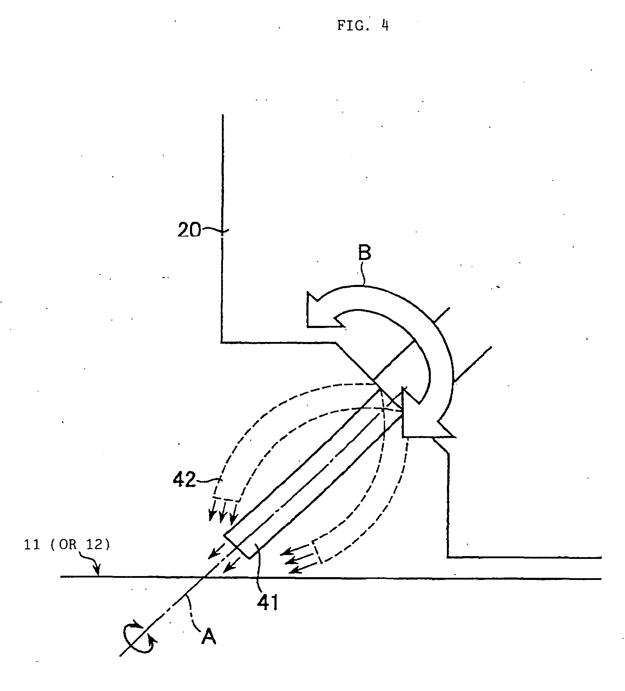

In addition, as shown in FIG. 4, either a linear nozzle 41 or an arc nozzle 42 may be provided as the foreign matter purging fluid outlet. Foreign matter purging fluid is discharged from the linear nozzle 41 downward diagonally (at an angle of approximately 45 degrees). An arc nozzle 42 can rotate (see arrow B) about the axis indicated by reference symbol A to change the direction in which foreign matter purging fluid is discharged. Rotation of arc nozzle 42 about the axis line can be performed by the operator manually or by operation of an actuator disposed at the mounting point of arc nozzle 42 with a controller. In the latter case, the angle of the outlet can be adjusted according to the sliding speed of the slider.

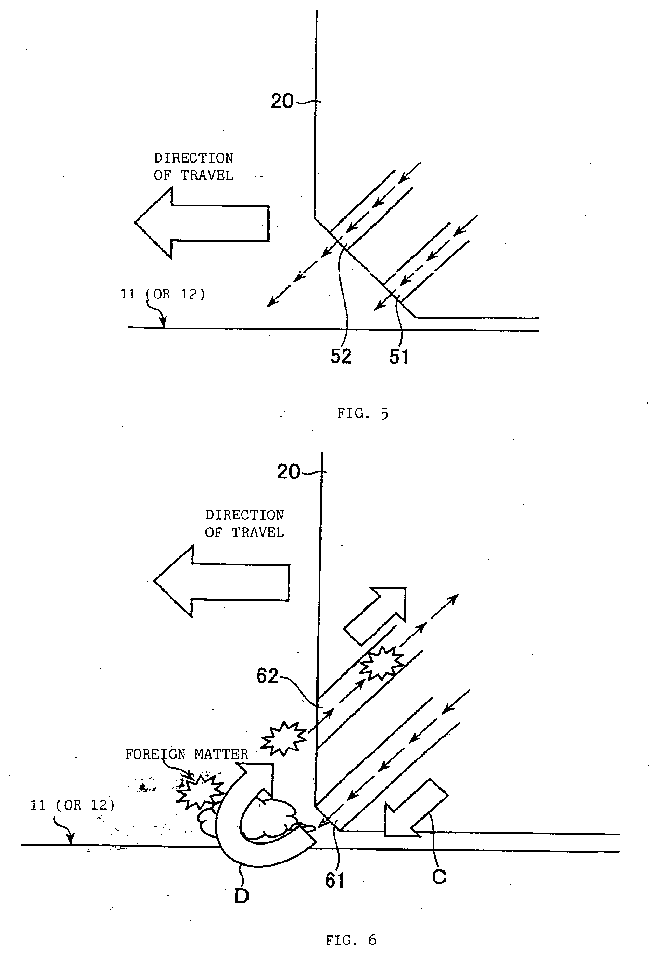

A plurality of (two or more) types of foreign matter purging fluid can also be supplied. For example, two or more types of foreign matter purging fluid may be selectively switched for spraying onto the guide surfaces. FIG. 5 shows an example of the installation of foreign matter purging fluid outlets in this case. In FIG. 5, reference numeral 51 denotes a foreign matter purging fluid outlet for spraying foreign matter purging fluid onto guide surface 11 (or 12) . The foreign matter purging fluid outlet 51 is connected to a high-pressure surfactant liquid source (not shown) that can be turned on or off and the foreign matter purging fluid outlet 52 is connected to a high-pressure cleaning liquid source (not shown) that can be turned on or off.

Switching between the high-pressure surfactant liquid source and the high-pressure cleaning liquid source, which can be turned on or off, is performed by, for example, the controller that controls the linear axis. For example, surfactant liquid may be sprayed from foreign matter purging fluid outlet 52 in the direction of travel to separate adhering oil or the like from guide surface 11 (or 12) and then the cleaning liquid may be sprayed from foreign matter purging fluid outlet 51 to clean the guide surface. This type of removal of foreign matter cleans the guide surfaces and maintains the precision of the linear axis, leading to improvement of reliability.

As shown in FIG. 6, a suction aperture 62 may also be provided in slider 20 to prevent foreign matter from scattering. The suction aperture 62 is formed near a foreign matter purging fluid outlet 61 and is connected to a suction pump (not shown). The foreign matter purging fluid outlet 61 blows foreign matter away by spraying foreign matter purging air or the like and suction aperture 61 sucks the foreign matter in. The foreign matter sucked in can be collected without harm to the environment by a known filter or foreign matter collection trap disposed at some point on the path ranging from the suction aperture 62 to the suction pump.

## Claims

1. A dust-proof linear bearing structure which comprises a guide having at least one guide surface aligned in the direction of linear motion and a slider having a surface facing each such guide surface,
wherein:
said slider has foreign matter purging fluid spraying means for spraying foreign matter purging fluid onto the bearing part of each said guide surface at a location exposed outside said slider,
said foreign matter purging fluid spraying means having at least one foreign matter purging fluid spraying aperture means for each said guide surface.

2. The dust-proof linear bearing structure according to claim 1, wherein said linear bearing is a fluid bearing configured between said guide surfaces and the surface of the slider which faces said guide surfaces.

3. The dust-proof linear bearing structure according to claim 1, wherein the direction in which foreign matter purging fluid is sprayed from said foreign matter purging fluid spraying aperture means is variable.

4. The dust-proof linear bearing structure according to claim 1, wherein the type of said foreign matter purging fluid can be selectively switched.

5. The dust-proof linear bearing structure according to claim 1, wherein the slider has at least one suction aperture for each said guide surface.
